# FASCICULE DE BREVET EUROPEEN

(11) **EP 3 301 644 B1**
(45) Date de publication et mention de la délivrance du brevet: **21.10.2020**
(21) Numéro de dépôt: 17193337.7
(22) Date de dépôt: 26.09.2017
(51) Int. Cl.: G06T 7/571, G06T 5/50, G06T 5/00, H04N 5/235

(54) **PROCÉDÉ DE CONSTRUCTION D'UNE CARTE DE PROFONDEUR D'UNE SCÈNE ET/OU D'UNE IMAGE ENTIÈREMENT FOCALISÉE**
VERFAHREN ZUR ERSTELLUNG EINER TIEFENKARTE EINER SZENE UND/ODER EINES VOLLKOMMEN FOKUSSIERTEN BILDES
METHOD FOR BUILDING A DEPTH MAP OF A SCENE AND/OR AN ALL-IN-FOCUS IMAGE

(30) Priorité: 03.10.2016 FR 1659497
(43) Date de publication de la demande: 04.04.2018
(73) Titulaire: Commissariat à l'Energie Atomique et aux Energies Alternatives, 75015 Paris (FR)
(72) Inventeur: EMBERGER, Simon, 38000 GRENOBLE (FR); GUICQUERO, William, 91440 BURES-SUR-YVETTE (FR)
(74) Mandataire: Cabinet Beaumont

(56) Documents cités:
- WO-A1-2016/151240
- KANEKO T ET AL: "A new smart vision system using a quick response dynamic focusing lens", 20000123; 20000123 - 20000127, 23 janvier 2000 (2000-01-23), pages 461-466, XP010377171,
- FUJIWARA H: "Passive range sensor using multi-focus images", INTELLIGENT ROBOTS AND SYSTEMS '96, IROS 96, PROCEEDINGS OF THE 1996 L EEE/RSJ INTERNATIONAL CONFERENCE ON OSAKA, JAPAN 4-8 NOV. 1996, NEW YORK, NY, USA,IEEE, US, vol. 1, 4 novembre 1996 (1996-11-04), pages 104-111, XP010212367, DOI: 10.1109/IROS.1996.570638 ISBN: 978-0-7803-3213-3
- Said Pertuz ET AL: "Analysis of focus measure operators for shape-from-focus", Pattern Recognition, vol. 46, no. 5, 1 May 2013 (2013-05-01), pages 1415-1432, XP055173399, ISSN: 0031-3203, DOI: 10.1016/j.patcog.2012.11.011

## Description

### Domaine

La présente demande concerne le domaine des systèmes d'imagerie de façon générale, et concerne plus particulièrement le domaine de l'acquisition d'images à trois dimensions (images 3D), c'est-à-dire d'images dans lesquelles, pour chaque pixel de l'image, on dispose d'une valeur relative à la distance entre la scène photographiée et le dispositif d'acquisition. L'ensemble des valeurs relatives à la distance entre la scène photographiée et le dispositif d'acquisition définit une carte de profondeur de la scène. La présente demande concerne plus particulièrement une méthode de construction d'une carte de profondeur d'une scène et un dispositif adapté à la mise en oeuvre de cette méthode. La présente demande concerne aussi l'acquisition d'une image entièrement focalisée d'une scène.

### Exposé de l'art antérieur

Diverses méthodes d'acquisition d'images 3D ont été proposées. Parmi ces méthodes, on peut notamment citer :
les méthodes d'acquisition par stéréovision, dans lesquelles plusieurs images à deux dimensions (images 2D) d'une même scène, prises sous des angles de vue différents, sont utilisées pour construire une image 3D ;
les méthodes d'acquisition par mesure de temps de vol, dans lesquelles la scène est illuminée par une source de lumière pulsée, et un capteur d'images rapide, synchronisé avec la source lumineuse, mesure, pour chaque pixel, le temps de parcours de la lumière entre la source lumineuse et la scène ;
les méthodes d'acquisition par mesure de décroissance d'éclairement ("light fall off" en anglais), dans lesquelles plusieurs images 2D d'une même scène, prises sous le même angle de vue mais dans des conditions d'éclairement différentes, sont utilisées pour construire une image 3D ;
les méthodes d'acquisition à éclairage structuré, dans lesquelles on illumine la scène avec un motif d'éclairage particulier prédéfini (par exemple un motif en grille), et on détermine des informations de profondeur à partir des déformations du motif d'éclairage par la scène ; et
les méthodes d'acquisition par analyse de flou ou de netteté, dans lesquelles plusieurs images 2D d'une même scène, prises sous le même angle de vue mais avec des mises au point distinctes, sont utilisées pour construire, par une analyse locale ou partiellement locale, une image 3D.

On s'intéresse ici plus particulièrement aux méthodes d'acquisition d'images 3D par analyse de flou ou de netteté. Un avantage de ces méthodes est en effet que l'acquisition des images 2D servant de base à la construction d'une image 3D est relativement simple à mettre en oeuvre, puisqu'elle ne nécessite pas de modifier l'angle de vue du dispositif d'acquisition entre deux prises successives. En outre, il s'agit d'une acquisition passive, dans la mesure où il n'est pas nécessaire de projeter un éclairage spécifique sur la scène.

Les méthodes de construction d'images 3D par analyse de flou ou de netteté sont basées sur le fait qu'un dispositif d'acquisition d'images 2D, comportant un capteur d'images et un système optique (ou objectif) placé en regard de ce capteur, présente une profondeur de champ limitée. Ainsi, quand le dispositif est focalisé sur une zone particulière de la scène, des zones de la scène plus proches ou plus éloignées peuvent former une image floue sur le capteur. La mesure du niveau de flou ou de netteté peut ainsi permettre de déterminer des informations quant à la distance entre la scène et le dispositif d'acquisition.

Un inconvénient des méthodes connues de construction de cartes de profondeur par analyse de flou ou de netteté réside dans leur complexité calculatoire élevée. En effet, la mesure du niveau de flou ou de netteté dans chaque image ou portion d'image est généralement basée sur des opérations de convolution relativement complexes.

Il serait souhaitable de pouvoir disposer d'une méthode de construction d'une carte de profondeur d'une scène à partir d'une série d'images de la scène prises sous le même angle de vue mais avec des mises au point distinctes, cette méthode présentant une complexité calculatoire réduite par rapport aux méthodes connues.

Il serait en outre souhaitable de pouvoir disposer d'une méthode permettant de construire une image entièrement focalisée d'une scène.

Il serait de plus souhaitable de pouvoir disposer d'une méthode permettant de fournir un estimateur de pertinence dans le but de simplifier et/ou rendre plus efficace un traitement haut niveau d'amélioration d'une image totalement focalisée ou d'une carte de profondeur, et d'interprétation d'information.

On notera en particulier que l'article intitulé "A New Smart Vision System Using A Quick-Response Dynamic Focusing Lens" de Takashi Kaneko et al. décrit une méthode de construction d'une image entièrement focalisée ou d'une carte de profondeur, mais ne décrit pas de fournir, pour chaque pixel, en plus de la valeur focalisée ou de la valeur de profondeur affectée au pixel, une valeur de sortie représentative de la vraisemblance de la valeur affectée au pixel. WO 2016/151240 décrit une méthode d'estimation de la profondeur de champ correspondant à un maximum de netteté du chaque pixel dans une série d'images.

### Résumé

Ainsi, un mode de réalisation prévoit un procédé de génération, au moyen d'un dispositif de traitement de signal, d'une carte de profondeur et/ou d'une image entièrement focalisée d'une scène, à partir d'une série d'images de la scène comprenant chacune un même nombre de pixels, les images étant prises sous un même angle de vue mais avec des mises au point distinctes, ce procédé comportant, pour chaque position de pixel dans la série d'images, les étapes définies dans la revendication 1. Les revendications dépendantes contiennent d'autres modes de réalisation de l'invention définie dans la revendication 1. Un autre mode de réalisation prévoit un dispositif de traitement de signal adapté à la mise en oeuvre d'un procédé de génération d'une carte de profondeur et/ou d'une image entièrement focalisée d'une scène tel que défini ci-dessus.

Un autre mode de réalisation prévoit un système comportant :
un dispositif d'acquisition comportant un capteur d'images, un système optique placé en vis-à-vis du capteur, et un circuit de contrôle adapté à commander l'acquisition d'une série d'images par le capteur en modifiant à chaque acquisition un réglage de mise au point du dispositif d'acquisition ; et
un dispositif de traitement de signal tel que défini ci-dessus, configuré pour générer une carte de profondeur et/ou une image entièrement focalisée d'une scène vue par le capteur à partir de la série d'images acquise par le dispositif d'acquisition.

Selon un mode de réalisation, le dispositif de traitement comprend, pour chaque pixel, un circuit de traitement adapté à identifier un extrémum de la valeur de sortie du pixel dans une série de valeurs de sortie successives fournies par le pixel.

Selon un mode de réalisation, chaque circuit de traitement est adapté à traiter à la volée les valeurs de sortie du pixel auquel il est associé.

Selon un mode de réalisation, chaque circuit de traitement est intégré dans le pixel auquel il est associé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma simplifié d'un exemple d'un système d'acquisition d'images selon un mode de réalisation ;
la figure 2 est un diagramme illustrant un principe de fonctionnement du système de la figure 1 ;
la figure 3 est un schéma bloc illustrant un exemple d'une méthode de construction d'une carte de profondeur d'une scène et/ou d'une image entièrement focalisée de la scène selon un mode de réalisation ;
la figure 4 illustre de façon schématique et partielle un exemple d'un capteur adapté à acquérir une carte de profondeur d'une scène et/ou une image entièrement focalisée de la scène selon un mode de réalisation ; et
la figure 5 illustre de façon schématique et partielle un autre exemple d'un capteur adapté à acquérir une carte de profondeur d'une scène et/ou une image entièrement focalisée de la scène selon un mode de réalisation.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, les utilisations qui peuvent être faites d'une carte de profondeur d'une scène n'ont pas été détaillées, les modes de réalisation décrits étant compatibles avec les applications connues susceptibles d'exploiter une carte de profondeur d'une scène. Dans la présente description, sauf précision contraire, les expressions "approximativement", "sensiblement", et "de l'ordre de" signifient à 10 % près, de préférence à 5 % près.

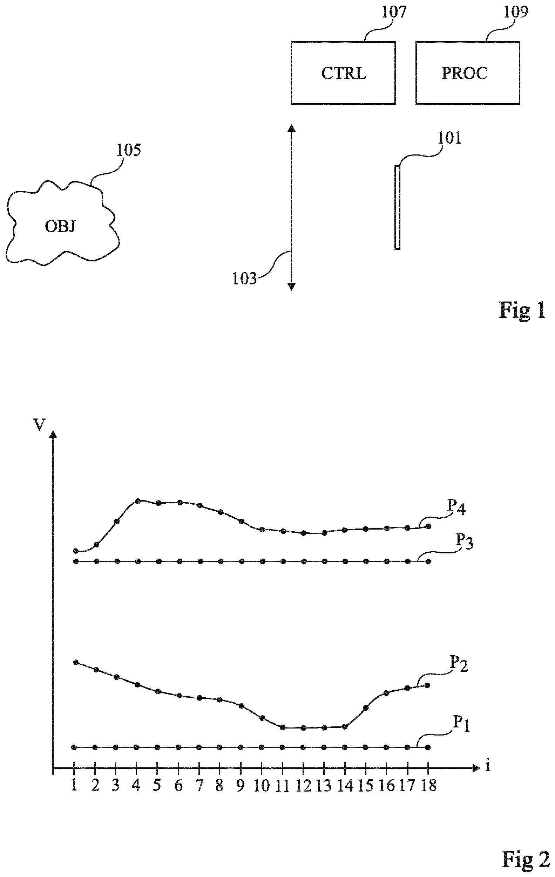

La figure 1 est un schéma simplifié d'un exemple d'un système d'acquisition d'images selon un mode de réalisation.

Le système de la figure 1 comprend un capteur d'images 101, par exemple un capteur CMOS. Le capteur 101 comprend une pluralité de pixels (non détaillés sur la figure 1), par exemple agencés en matrice selon des lignes et des colonnes. Lors d'une phase d'acquisition d'une image 2D, chaque pixel est adapté à fournir une valeur de sortie représentative du niveau d'éclairement qu'il reçoit pendant une période d'intégration. L'ensemble des valeurs de sortie des pixels constitue une image 2D d'une scène vue par le capteur. A titre d'exemple, chaque pixel du capteur 101 comprend une photodiode et un ou plusieurs transistors de contrôle.

Le système de la figure 1 comprend en outre un système optique 103 ou objectif, destiné à être placé entre le capteur 101 et une scène 105 (OBJ) dont on souhaite acquérir une image. Le système optique 103 comprend par exemple une ou plusieurs lentilles. Le système optique 103 est adapté à focaliser sur le capteur 101 la lumière en provenance de la scène 105.

Dans le système de la figure 1, la mise au point du dispositif d'acquisition comprenant le capteur 101 et le système optique 103 est configurable. Autrement dit, la distance entre le système optique 103 et le capteur 101 et/ou la distance focale du système optique 103 peuvent être modifiées de façon à permettre, sans déplacer le dispositif d'acquisition, de modifier la netteté de l'image de la scène 105 projetée sur le capteur 101. La mise au point du dispositif d'acquisition comprenant le capteur 101 et le système optique 103 est par exemple configurable manuellement. Toutefois, dans un mode de réalisation préféré, la mise au point du dispositif d'acquisition est configurable électriquement.

Le système de la figure 1 comprend en outre un circuit de contrôle 107 (CTRL) adapté, lors d'une phase d'acquisition d'une image 3D, à commander le dispositif d'acquisition comprenant le capteur 101 et le système optique 103 pour acquérir successivement une série de n images 2D de la scène 105, où n est un entier supérieur à 1, par exemple une série de 5 à 50 images successives, en modifiant à chaque acquisition la mise au point du dispositif. La variation de mise au point appliquée au dispositif lors de l'acquisition de la série d'images 2D est de préférence une variation monotone. Autrement dit, la variation de mise au point appliquée est de préférence telle que la distance entre le dispositif d'acquisition et le plan de la scène 105 apparaissant le plus net dans l'image projetée sur le capteur 101 croisse de façon monotone ou décroisse de façon monotone entre la première et la dernière acquisition. Si la variation de mise au point appliquée au dispositif d'acquisition n'est pas monotone, les images 2D de la série d'images peuvent par exemple être réordonnées lors d'une phase ultérieure de construction d'une carte de profondeur de la scène.

De préférence, le système optique 103 comprend une lentille modulable, c'est-à-dire une lentille fixe dont on peut faire varier la distance focale par commande électrique. Dans ce cas, le contrôle de la mise au point du dispositif d'acquisition par le circuit 107 est réalisé en commandant des variations de la distance focale de la lentille modulable. La lentille modulable est par exemple une lentille liquide, ou une lentille à cristaux liquides. L'utilisation d'une lentille modulable pour contrôler la mise au point du dispositif d'acquisition présente l'avantage de limiter les effets de zoom de mise au point, c'est-à-dire les variations d'échelle entre les différentes images 2D, liées aux différences de mise au point du dispositif lors de l'acquisition de ces images. Les modes de réalisation décrits ne se limitent toutefois pas à l'utilisation d'une lentille modulable. On notera en particulier que si il existe des différences de grossissement et/ou d'alignement et/ou de luminosité globale entre les différentes images 2D de la série d'images, la phase ultérieure de construction d'une carte de profondeur de la scène à partir de la série d'images 2D acquises peut comprendre une étape préalable de correction des artefacts liés à l'acquisition comprenant une remise à l'échelle et/ou un réalignement et/ou un réajustement de luminosité globale des différentes images 2D.

Le système de la figure 1 comprend de plus un circuit de traitement 109 (PROC) adapté à recevoir la série d'images 2D acquise par le capteur, et à construire, à partir de ces images, une carte de profondeur de la scène, c'est-à-dire à déterminer, pour chaque pixel, une information relative à la distance entre le dispositif d'acquisition et la scène, et/ou adapté à construire, à partir de ces images, une image entièrement focalisée de la scène. Comme cela sera expliqué plus en détail ci-après, le circuit de traitement 109 peut être externe au capteur 101, ou être totalement ou partiellement intégré dans le capteur 101.

La figure 2 est un diagramme illustrant un principe de fonctionnement du système de la figure 1. Plus particulièrement, la figure 2 représente, pour quatre pixels distincts P₁, P₂, P₃, P₄ du capteur 101, la valeur du pixel dans chacune des n images 2D acquises par le capteur 101 en vue de la construction d'une carte de profondeur et/ou d'une image entièrement focalisée. Sur le diagramme de la figure 2, l'axe des abscisses représente le rang i des images dans la série d'images 2D acquises par le capteur, avec i entier allant de 1 à n, et l'axe des ordonnées représente la valeur V des pixels dans les images correspondantes. Dans l'exemple représenté, la série d'images 2D acquise en vue de la construction d'une carte de profondeur et/ou d'une image entièrement focalisée comprend n=18 images. Dans cet exemple, on considère que la variation de mise au point appliquée au dispositif d'acquisition entre l'acquisition de l'image de rang i=1 et l'acquisition de l'image de rang i=18 est monotone. De plus, on considère ici que les images de rangs i=1 à i=18 sont sensiblement à la même échelle et sont sensiblement alignées.

Comme cela apparaît sur la figure 2, les valeurs des pixels P₁ et P₃ sont sensiblement constantes dans la série de 18 images acquises par le capteur 101. Les pixels P₁ et P₃ correspondent typiquement à des pixels situés en regard de zones uniformes de la scène, pour lesquels la modification de la mise au point du dispositif d'acquisition ne se traduit pas par une modification significative de l'intensité lumineuse reçue par le pixel.

Les valeurs des pixels P₂ et P₄ varient en revanche significativement entre les différentes images. Les pixels P₂ et P₄ correspondent typiquement à des pixels situés en regard de fronts ou contours de l'image, ou en regard de zones voisines de fronts ou contours de l'image, pour lesquels la modification de la mise au point du dispositif d'acquisition se traduit par une modification significative de l'intensité lumineuse reçue par le pixel.

On observe en outre que dans la série d'images acquise par le capteur 101, les valeurs des pixels P₂ et P₄ passent chacune par un extrémum. Plus particulièrement, la valeur du pixel P₂ passe par un minimum dans l'image de rang i=11, et la valeur du pixel P₄ passe par un maximum dans l'image de rang i=4. L'image dans laquelle la valeur de sortie d'un pixel Pⱼ, où j est un entier représentant l'indice ou la position du pixel dans le capteur, passe par un extrémum, correspond à l'image pour laquelle le point de la scène situé en regard du pixel Pⱼ est le plus net. Pour une position de pixel Pⱼ donnée, le rang de l'image pour laquelle la valeur du pixel passe par un extrémum est donc représentatif de la distance entre le dispositif d'acquisition et le point correspondant de la scène. A titre d'illustration, dans l'exemple de la figure 2, si l'on considère que la variation de mise au point appliquée au dispositif d'acquisition est telle que la distance entre le dispositif d'acquisition et le plan de la scène 105 apparaissant le plus net dans l'image projetée sur le capteur 101 croit de façon monotone entre la première (rang i=1) et la dernière (rang i=18) acquisition, on peut déduire du diagramme de la figure 2 que le point de la scène vu par le pixel P₄ est plus proche du dispositif d'acquisition que le point de la scène vu par le pixel P₂.

Selon un aspect d'un mode de réalisation, pour construire une carte de profondeur d'une scène à partir d'une série d'images 2D de la scène acquise par le capteur 101, on prévoit de rechercher, pour chaque position de pixel dans la série d'images, un extrémum de la valeur du pixel, et d'affecter au pixel une valeur de profondeur fonction du rang de l'image dans laquelle l'extrémum a été détecté. L'ensemble des valeurs de profondeur affectées aux pixels constitue une carte de profondeur de la scène.

A titre de variante, en plus de la valeur de profondeur, on peut mémoriser, pour chaque pixel, un estimateur de vraisemblance pouvant par exemple être utilisé par l'application finale pour pondérer, affiner ou débruiter la valeur de profondeur affectée au pixel. A titre d'exemple, l'estimateur de vraisemblance est fonction de la dynamique de la variation de la valeur du pixel dans la série d'images 2D. Par exemple, l'estimateur de vraisemblance est égal à la différence entre la valeur maximale et la valeur minimale du pixel dans la série d'images 2D acquise par le capteur. Ainsi, dans l'exemple de la figure 2, les estimateurs de vraisemblance affectés aux pixels P₁ et P₂ seront relativement faibles par rapport aux estimateurs de vraisemblance affectés aux pixels P₂ et P₄. En effet, la pertinence de l'estimation de profondeur obtenue par la méthode proposée est plus faible dans les zones uniformes de la scène que dans les zones contrastées. A titre de variante, l'estimateur de vraisemblance est fonction de la dynamique d'une variation locale de la valeur du pixel dans la série d'images 2D, c'est-à-dire de la dynamique d'une variation locale de la valeur du pixel sur les courbes de la figure 2. L'ensemble des estimateurs de profondeur affectés aux pixels constitue une carte de vraisemblance de la scène.

Pour chaque position de pixel, la valeur de l'extrémum du pixel peut en outre être mémorisée de façon à construire une image dite entièrement focalisée, c'est-à-dire dans laquelle, pour chaque pixel, la valeur retenue du pixel est celle de l'image dans laquelle le pixel est le plus net.

Alternativement, pour certaines applications, seule l'image entièrement focalisée présente un intérêt. Dans ce cas, on peut prévoir de mémoriser uniquement la valeur de l'extrémum de chaque pixel de façon à construire une image entièrement focalisée de la scène, et non des valeurs de profondeur ou des estimateurs de vraisemblance.

A titre de variante, pour certaines applications, on peut prévoir de conserver uniquement l'image entièrement focalisée et la carte de vraisemblance, et non la carte de profondeur, c'est-à-dire de conserver uniquement la valeur de l'extrémum et l'estimateur de vraisemblance de chaque pixel.

La carte de vraisemblance peut par exemple être exploitée lors d'un traitement ultérieur pour déterminer, pour chaque pixel, si la valeur de profondeur et/ou la valeur focalisée déterminées pour le pixel sont suffisamment fiables.

A titre d'exemple, la carte de vraisemblance peut être utilisée pour détecter des contours dans l'image, les estimateurs de vraisemblances étant a priori plus élevés au niveau des contours que dans les zones uniformes de l'image. Pour améliorer la détection de contours, on peut par exemple appliquer diverses opérations de filtrage à la carte de vraisemblance. Par exemple, on peut prévoir un procédé de post-traitement de la carte de vraisemblance comprenant une première étape de filtrage passe-haut, suivie d'un lissage local puis d'une extraction des pixels correspondant aux maxima locaux de la carte de vraisemblance. Pour réduire l'impact du bruit, ce traitement peut par exemple être effectué sur une image préalablement sous-échantillonnée issue de la sélection - par bloc - des pixels dont la valeur de vraisemblance est la plus importante. Une fois la carte des contours extraite, on peut par exemple choisir de considérer uniquement les valeurs de profondeur correspondant aux contours de l'image.

Un autre exemple de procédé de post-traitement des données acquises peut être de propager de proche en proche les valeurs de profondeur les plus pertinentes, en tenant compte de la carte de vraisemblance, et, éventuellement, de l'image entièrement focalisée. Pour cela, on peut par exemple, pour chaque pixel, mettre en oeuvre les étapes suivantes :
- définir un groupe de pixels voisins du pixel considéré ;
- pour chaque pixel du groupe de pixels voisins, calculer un indicateur représentatif de la probabilité que la valeur de profondeur du pixel soit plus pertinente que celles des autres pixels du groupe, par exemple en tenant compte uniquement des valeurs de vraisemblance des pixels du groupe, ou en tenant compte des valeurs de vraisemblance et des valeurs focalisées des pixels du groupe, et, éventuellement de la distance au pixel central du groupe ; et
- affecter au pixel considéré la valeur de profondeur et la valeur de vraisemblance du pixel du groupe ayant la plus forte probabilité d'avoir la valeur de profondeur la plus pertinente.

Ces trois étapes peuvent avantageusement être mises en oeuvre de façon itérative une pluralité de fois. Par exemple, les trois étapes susmentionnées peuvent être répétées en boucle jusqu'à atteindre un critère d'arrêt défini au préalable.

Un autre exemple de procédé de post-traitement des données acquises peut consister à mettre en oeuvre une régularisation basée sur la co-parcimonie entre l'image entièrement focalisée et la carte de profondeur, exploitant la carte de vraisemblance. Ce procédé comprend par exemple une étape initiale de détermination d'un masque M binaire définissant les positions des pixels pertinents. A titre d'exemple, les pixels sélectionnés dans le masque M sont principalement les pixels correspondant à des contours de l'image, identifiés à partir de la carte de vraisemblance. Pour réaliser cette opération de régularisation, on peut par exemple, définir deux fonctions de coût nommées respectivement terme de fidélité et fonction de régularisation. L'influence relative de chaque partie de cette fonction objective peut être pondérée par un scalaire nommé paramètre de régularisation et noté λ. La fonction de régularisation peut avantageusement exploiter la co-parcimonie (ou parcimonie conjointe) des valeurs de profondeur et des valeurs focalisées tandis que le terme de fidélité permet d'évaluer la distance entre les mesures initiales de profondeur et le résultat de régularisation pour les pixels sélectionnés par le masque M. Un algorithme robuste vis-à-vis d'erreurs ou anomalies sur les valeurs de profondeur extraites peut par exemple prendre la forme suivante :
- Calculer le masque M initial déterminant les valeurs de profondeur considérées à l'aide de la carte de vraisemblance.
- Effectuer une régularisation de paramètre λ des mesures de profondeur et les mettre à jour.
- Détecter des points aberrants des valeurs de profondeur mis à jour, par exemple à l'aide d'un filtre médian et retirer les positions correspondantes du masque M considéré.
- Mettre à jour le paramètre de régularisation λ.

Ces quatre étapes peuvent avantageusement être mises en oeuvre de façon itérative une pluralité de fois. Par exemple, les trois étapes susmentionnées peuvent être répétées en boucle jusqu'à atteindre un critère d'arrêt défini au préalable.

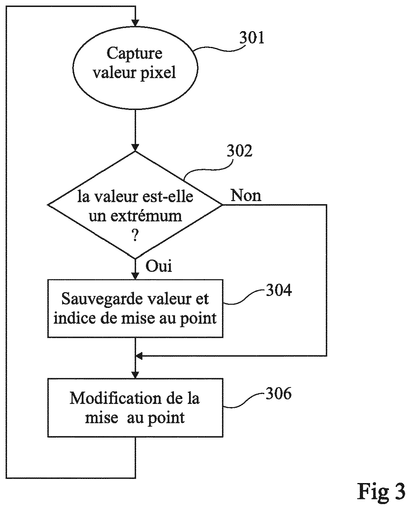

La figure 3 est un schéma bloc illustrant un exemple d'une méthode de construction d'une carte de profondeur d'une scène et/ou d'une image entièrement focalisée de la scène, basée sur les principes exposés en relation avec les figures 1 et 2. La figure 3 représente plus particulièrement une méthode d'acquisition d'une valeur de profondeur et/ou d'une valeur focalisée pour un pixel donné Pⱼ du capteur 101 de la figure 1. Cette même méthode peut toutefois être mise en oeuvre en parallèle, par exemple simultanément, pour tous les pixels du capteur.

Lors d'une étape 301 ("Capture valeur pixel"), le capteur fournit une valeur de sortie du pixel Pⱼ, représentative du niveau d'éclairement reçu par le pixel pendant une phase d'intégration. Lors de cette étape, la mise au point du dispositif d'acquisition est réglée à un premier état.

Lors d'une étape 302 ("La valeur est-elle un extrémum ?") postérieure à l'étape 301, le circuit de traitement 109 (figure 1) détermine si la valeur acquise à l'étape 301 est un extrémum parmi la série de valeurs déjà acquises pour ce pixel.

Si, à l'étape 302, le circuit de traitement 109 détermine que la valeur du pixel est un extrémum, alors la valeur du pixel et le rang de l'acquisition correspondante sont sauvegardés lors d'une étape 304 ("Sauvegarde valeur et indice de mise au point"). Alternativement, si l'on souhaite construire uniquement une image entièrement focalisée et non une carte de profondeur, le rang de l'acquisition peut ne pas être sauvegardé à l'étape 304.

Lors d'une étape 306 ("Modification de la mise au point") postérieure à l'étape 304, le réglage de la mise au point du dispositif est modifié, par exemple par l'intermédiaire du circuit de contrôle 107 (figure 1), puis les étapes 301 à 306 sont réitérées.

Si, à l'étape 302, le circuit de traitement 109 détermine que la valeur du pixel n'est pas un extrémum, alors l'étape 304 est omise et l'étape 306 est directement mise en oeuvre.

Après un nombre n prédéfini d'itérations des étapes 301 à 306, la dernière valeur d'extrémum sauvegardée pour le pixel, et, le cas échéant, le rang d'acquisition correspondant peuvent être utilisés pour construire respectivement une image entièrement focalisée et une carte de profondeur de la scène.

La recherche d'extrémum mise en oeuvre à l'étape 302 peut être réalisée en comparant deux à deux les valeurs consécutives de la série de valeurs de sortie du pixel. A titre de variante, la recherche d'extrémum peut être réalisée par recherche d'un changement de signe de la dérivée de la série de valeurs de sortie du pixel. Plus généralement, toute méthode connue de recherche d'extrémum dans une suite de valeurs peut être utilisée.

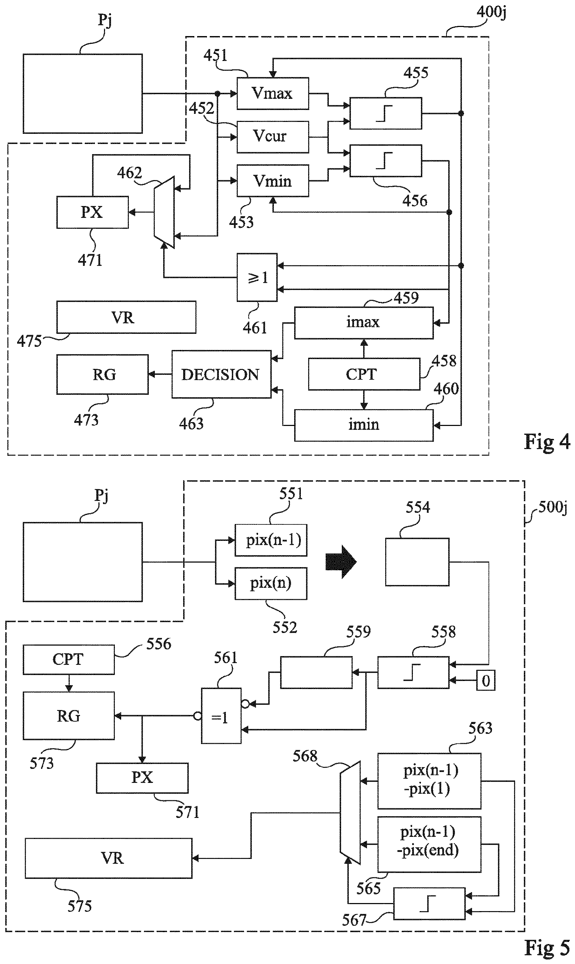

La figure 4 illustre de façon schématique et partielle un exemple d'un capteur adapté à acquérir une carte de profondeur d'une scène et/ou une image entièrement focalisée d'une scène selon un mode de réalisation.

Sur la figure 4, un unique pixel Pⱼ du capteur a été représenté, ainsi qu'un circuit 400j de traitement des valeurs de sortie du pixel. A titre d'exemple, chacun des pixels Pⱼ du capteur comprend son propre circuit de traitement 400j. Le circuit de traitement 400j peut être intégré au pixel Pⱼ, au sein de la matrice de pixels, ou être déporté en périphérie de la matrice de pixels, par exemple en pied ou en tête de colonne. A titre de variante, le circuit de traitement 400j peut être déporté à l'extérieur du capteur. Le circuit de traitement 400j peut être un circuit de traitement analogique, notamment s'il est intégré dans le pixel, ou un circuit de traitement numérique, auquel cas il peut être placé en aval d'un étage de numérisation des valeurs de sortie des pixels.

Le pixel Pⱼ n'a pas été détaillé, les modes de réalisation décrits étant compatibles avec toutes ou la plupart des structures connues de pixels.

Le circuit 400j comprend trois registres 451 (Vmax), 452 (Vcur) et 453 (Vmin) reliés à la sortie du pixel Pⱼ. Le circuit 400ⱼ comprend en outre deux comparateurs 455 et 456. Le circuit 400ⱼ comprend de plus un compteur d'itérations 458 (CPT) et deux registres 459 (imax) et 460 (imin) reliés à la sortie du compteur 458.

A chaque acquisition d'une valeur d'éclairement par le pixel Pⱼ, cette valeur ou valeur de sortie courante du pixel, est écrite dans le registre 452 (Vcur), et le compteur d'itération 458 (CPT) est incrémenté. La valeur de sortie courante du pixel est comparée, via le comparateur 455, à la valeur contenue dans le registre 451 (Vmax), et, via le comparateur 456, à la valeur contenue dans le registre 453 (Vmin) . Si la valeur de sortie courante du pixel est supérieure à la valeur stockée dans le registre 451 (Vmax) (ou supérieure à la valeur stockée dans le registre 451 plus une valeur seuil fixe prédéterminée correspondant par exemple à un offset du comparateur), la valeur stockée dans le registre 451 (Vmax) est remplacée par la valeur de sortie courante du pixel, et la valeur stockée dans le registre 459 (imax) est remplacée par la valeur courante du compteur d'itérations 458. Sinon, les valeurs stockées dans les registres 451 (Vmax) et 459 (imax) restent inchangées. Si la valeur de sortie courante du pixel est inférieure à la valeur stockée dans le registre 453 (Vmin) (ou inférieure à la valeur stockée dans le registre 453 moins une valeur seuil fixe prédéterminée correspondant par exemple à un offset du comparateur), la valeur stockée dans le registre 453 (Vmin) est remplacée par la valeur de sortie courante du pixel, et la valeur stockée dans le registre 460 (imin) est remplacée par la valeur courante du compteur d'itérations 458. Sinon, les valeurs stockées dans les registres 453 (Vmin) et 460 (imin) restent inchangées.

De plus, à chaque fois que l'une des deux valeurs stockées dans les registres 451 (Vmax) et 453 (Vmin) est mise à jour, c'est-à-dire à chaque fois que l'un des deux comparateurs 455 et 456 change d'état, la valeur de sortie courante du pixel est écrite dans un premier registre de sortie 471 (PX). Si aucun des deux comparateurs ne change d'état, la valeur stockée dans le registre de sortie 471 reste inchangée. Dans l'exemple représenté, pour réaliser cette dernière fonction, le circuit 400j comprend une porte OU 461 et un multiplexeur 462 de deux entrées vers une sortie. La porte OU reçoit sur une première entrée le signal de sortie du comparateur 455 et sur une deuxième entrée le signal de sortie du comparateur 456. Le signal de sortie de la porte OU 461 commande le multiplexeur 462. Une première entrée du multiplexeur 462 est reliée à la sortie du pixel Pⱼ, la deuxième entrée du multiplexeur 462 étant reliée à la sortie du registre 471. La sortie du multiplexeur 462 est reliée à l'entrée du registre 471.

Avant la première acquisition d'une série d'acquisitions d'images par le capteur, les valeurs des registres 451 (Vmax) et 453 (Vmin) sont par exemple initialisées respectivement à la valeur minimale qui peut être inscrite dans le registre et à la valeur maximale qui peut être inscrite dans le registre. De plus, le compteur d'itérations 458 peut être réinitialisé.

A la fin d'une phase d'acquisition d'une série d'images par le capteur, le registre 451 (Vmax) contient la valeur maximale acquise pour le pixel Pⱼ, et le registre 453 (Vmin) contient la valeur minimale acquise pour le pixel Pⱼ. De plus, le registre 459 (imax) contient le rang de l'acquisition ayant produit la valeur maximale du pixel Pⱼ, et le registre 460 (imin) contient le rang de l'acquisition ayant produit la valeur minimale du pixel Pⱼ. En outre, le registre de sortie 471 contient la valeur du dernier extrémum détecté pour le pixel, qui peut être soit le maximum soit le minimum. Cette valeur constitue la valeur de sortie finale du pixel qui peut être utilisée par exemple pour la construction d'une image entièrement focalisée.

Le circuit 400j comprend en outre un circuit logique de décision 463 (DECISION) adapté, à partir des valeurs de rang stockées dans les registres 459 et 460, à déterminer si l'extrémum stocké dans le registre de sortie 471 est le maximum ou le minium des valeurs de sortie fournies par le pixel Pⱼ. Pour cela, le circuit 463 peut comparer les valeurs de rang stockées dans les registres 459 (imax) et 460 (imin). La plus grande des deux valeurs de rang correspond au dernier des extrémums détectés, et donc au rang de la valeur de pixel stockée dans le registre de sortie 471. Cette valeur de rang est alors écrite par le circuit de décision 463 dans un deuxième registre de sortie 473 (RG). Cette valeur constitue la valeur de profondeur du pixel, qui peut être utilisée par exemple pour la construction d'une carte de profondeur de la scène.

Le circuit 400j comprend de plus un troisième registre de sortie 475 (VR) dans lequel est écrite une valeur égale à la différence entre la valeur stockée dans le registre 451 (Vmax) et la valeur stockée dans le registre 453 (Vmin) à la fin de la phase d'acquisition. Cette valeur constitue un estimateur de vraisemblance de la valeur de profondeur affectée au pixel.

La figure 5 illustre de façon schématique et partielle un autre exemple d'un capteur adapté à acquérir une carte de profondeur d'une scène et/ou une image entièrement focalisée d'une scène selon un mode de réalisation.

Le capteur de la figure 5 diffère du capteur de la figure 4 en ce que, dans le capteur de la figure 5, le circuit de traitement 400j du capteur de la figure 4 est remplacé par un circuit de traitement 500j.

Le circuit 500ⱼ comprend deux registres 551 (pix(n-1)) et 552 (pix(n)). Le circuit 500ⱼ comprend en outre un circuit de dérivation 554, et un compteur d'itérations 556 (CPT).

A chaque acquisition d'une valeur d'éclairement par le pixel Pⱼ, le compteur d'itérations 556 est incrémenté, la valeur de sortie courante du pixel est écrite dans le registre 552 (pix(n)), et la valeur précédemment stockée dans le registre 552 (pix(n)) est écrite dans le registre 551 (pix(n-1)). Les deux valeurs sont transmises au circuit de dérivation 554 qui calcule la différence entre la valeur de sortie courante du pixel (stockée dans le registre 552) et la valeur de sortie précédente du pixel (stockée dans le registre 551). Cette différence correspond à la dérivée de la valeur de sortie du pixel. Le circuit 500j comprend en outre un circuit de détection d'une inversion du signe de cette différence. Dans cet exemple, le circuit de détection d'inversion comprend un comparateur 558 comparant à zéro le résultat de la différence calculée par le circuit de dérivation 554. Le résultat de la comparaison est mémorisé dans un buffer ou circuit à retard 559. Le circuit de détection d'inversion comprend en outre une porte logique NON ET 561 recevant sur une première entrée le signal mémorisé dans le buffer 559, correspondant au signal de sortie du comparateur 558 à l'itération précédente, et, sur une deuxième entrée, le signal de sortie courant du comparateur 558. Le signal de sortie de la porte logique 561 passe à l'état haut lorsque le signe de la différence calculée par le circuit de dérivation 554 change entre deux acquisitions successives d'une valeur de sortie du pixel Pⱼ. Lorsque le signal de sortie de la porte logique 561 passe à l'état haut, la valeur précédente du pixel, contenue dans le registre 551 (pix(n-1)) est écrite dans un premier registre de sortie 571 (PX). De plus, la valeur courante du compteur d'itérations 556 est écrite dans un deuxième registre de sortie 573 (RG). A titre de variante, les valeurs des registres de sortie 571 et 573 sont mises à jour uniquement lorsque la différence pix(n)-pix(n-1) change de signe et est supérieure (en valeur absolue) à une valeur seuil fixe prédéterminée.

A la fin d'une phase d'acquisition d'une série d'images par le capteur, le registre 571 (PX) contient la valeur du pixel correspondant au dernier extrémum détecté dans la série de valeurs de sortie du pixel acquises. Cette valeur constitue la valeur de sortie finale du pixel qui peut être utilisée par exemple pour la construction d'une image entièrement focalisée. De plus, le registre 573 (RG) contient le rang de cet extrémum dans la série de valeurs de sortie du pixel. Cette valeur constitue la valeur de profondeur du pixel, qui peut être utilisée par exemple pour la construction d'une carte de profondeur de la scène.

Au cours de la phase d'acquisition, les première et dernière valeurs acquises pour le pixel sont en outre stockées dans des registres non représentés. A la fin de la phase d'acquisition, la différence entre la valeur de pixel stockée dans le registre de sortie 571 et la première valeur de sortie du pixel est calculée et écrite dans un registre 563 (pix(n-1)-pix(1)). De plus, la différence entre la valeur de pixel stockée dans le registre de sortie 571 et la dernière valeur de sortie du pixel est calculée et écrite dans un registre 565 (pix(n-1)-pix(end)). Ces deux différences sont comparées par un comparateur 567, et la plus grande des deux différences est écrite dans un troisième registre de sortie 575 (VR). Pour cela, le circuit 500j comprend en outre un multiplexeur 568 de deux entrées (reliées respectivement à la sortie du registre 563 et à la sortie du registre 565) vers une sortie (reliée à l'entrée du registre 575), dont la commande est reliée à la sortie du comparateur 567. La valeur stockée dans le registre de sortie 575 (VR) à l'issue de la phase d'acquisition constitue un estimateur de vraisemblance de la valeur de profondeur affectée au pixel.

Un avantage des modes de réalisation décrits réside dans la faible complexité calculatoire de la méthode proposée de construction d'une carte de profondeur et/ou d'une image entièrement focalisée. En particulier, pour déterminer la valeur de profondeur d'un pixel, la méthode proposée tient compte uniquement des variations de la valeur du pixel dans la série d'images 2D acquise par le capteur, mais ne tient pas compte des valeurs de sortie d'autres pixels du capteur. Ceci simplifie significativement la mise en oeuvre de la méthode par rapport aux méthodes connues.

Des modes de réalisation particuliers ont été décrits. Diverses variantes et modifications apparaîtront à l'homme de l'art. En particulier, les modes de réalisation décrits ne se limitent pas aux exemples particuliers de systèmes d'acquisition et de capteur décrits ci-dessus. Plus généralement, tout autre dispositif adapté peut être utilisé pour mettre en oeuvre la méthode proposée de construction d'une carte de profondeur d'une scène et/ou d'une image entièrement focalisée d'une scène, basée sur la recherche, pour chaque position de pixel, d'un extrémum dans la série de valeurs acquises pour le pixel.

En outre, bien que l'on ait décrit uniquement des exemples de réalisation dans lesquels les données acquises par chaque pixel du capteur sont traitées à la volée, au fur et à mesure des acquisitions des n images 2D par le capteur, les modes de réalisation décrits ne se limitent pas à ce cas particulier. A titre de variante, toutes les images 2D de la série d'images peuvent être acquises dans un premier temps, puis, dans un deuxième temps, le traitement de recherche d'extrémum pour chaque position de pixel peut être mis en oeuvre, éventuellement par un dispositif de traitement externe.

De plus, les modes de réalisation décrits ne se limitent pas aux exemples susmentionnés de méthodes de recherche d'extrémum dans la série de valeurs acquises pour chaque pixel. Plus généralement, toute méthode de recherche d'extrémum connue peut être utilisée. De plus, pour chaque position de pixel, un prétraitement, par exemple un traitement de lissage, par exemple de type filtrage passe-haut, peut être mis en oeuvre sur la suite de valeurs acquises pour le pixel, préalablement à la recherche d'extrémum, afin de réduire la sensibilité de la méthode aux bruits parasites. On notera en particulier qu'au lieu de rechercher un extrémum de la valeur du pixel dans la série d'images considérée, on peut prévoir de rechercher un extrémum d'une dérivée, par exemple une dérivée d'ordre n supérieur ou égal à 2, de la valeur du pixel dans la série d'images considérée.

Par ailleurs, les modes de réalisation décrits ne se limitent pas aux exemples de méthode de calcul de l'estimateur de vraisemblance de chaque pixel décrits en relation avec les figures 4 et 5. Plus généralement, d'autres estimateurs de vraisemblance peuvent être utilisés, par exemple le maximum de la valeur absolue de la dérivée d'ordre n de la valeur du pixel dans la série d'images, ou encore l'écart type de la valeur absolue de la dérivée d'ordre n de la valeur du pixel dans la série d'images.

Ainsi, la portée de la présente invention n'est pas définie par la description mais plutôt limitée par les revendications suivantes.

## Revendications

1. Procédé de génération, au moyen d'un dispositif de traitement de signal (109 ; 400j ; 500j), d'une carte de profondeur et/ou d'une image entièrement focalisée d'une scène (105), à partir d'une série d'images de la scène comprenant chacune un même nombre de pixels (Pj), les images étant prises sous un même angle de vue mais avec des mises au point distinctes, ce procédé comportant, pour chaque position de pixel (Pj) dans la série d'images, les étapes suivantes :
a) rechercher un extrémum de la valeur du pixel ou d'une dérivée de la valeur du pixel dans la série d'images en tenant compte uniquement des valeurs du pixel à la position considérée dans la série d'images ;
b) affecter à ladite position de pixel (Pⱼ) :
- une première valeur fonction du rang, dans la série d'images, de l'image dans laquelle le dernier extrémum a été identifié à l'étape a) de façon à construire une carte de profondeur de la scène, et/ou
- une deuxième valeur égale à la valeur du pixel dans l'image dans laquelle le dernier extrémum a été identifié à l'étape a) de façon à construire une image entièrement focalisée de la scène ;
c) affecter à ladite position de pixel (Pj) une troisième valeur représentative de la pertinence de la première et/ou deuxième valeur affectée au pixel à l'étape b), la troisième valeur étant déterminée en tenant compte uniquement des valeurs du pixel considéré dans la série d'images ; et
d) fournir une donnée de sortie comprenant la première et/ou la deuxième valeur, et la troisième valeur affectées au pixel,
dans lequel la troisième valeur est représentative de la dynamique de la variation de la valeur du pixel (Pⱼ) dans la série d'images.

2. Procédé selon la revendication 1, dans lequel la troisième valeur est égale à la différence entre la valeur maximale et la valeur minimale du pixel (Pj) dans la série d'images.

3. Procédé selon la revendication 1, dans lequel la troisième valeur est représentative de la dynamique d'une variation locale de la valeur du pixel (Pⱼ) dans la série d'images.

4. Procédé selon l'une quelconque des revendications 1 à 3, dans lequel, à l'étape a), la recherche d'extrémum est réalisée en comparant deux à deux les valeurs du pixel (Pⱼ) dans les images consécutives de la série d'images.

5. Procédé selon l'une quelconque des revendications 1 à 3, dans lequel, à l'étape a), la recherche d'extrémum est réalisée en recherchant un changement de signe de la dérivée de la valeur du pixel (Pj) dans la série d'images.

6. Dispositif de traitement de signal (109) adapté à la mise en oeuvre d'un procédé de génération d'une carte de profondeur et/ou d'une image entièrement focalisée d'une scène (105) selon l'une quelconque des revendications 1 à 5.

7. Système comportant :
un dispositif d'acquisition comportant un capteur d'images (101), un système optique (103) placé en vis-à-vis du capteur (101), et un circuit de contrôle (107) adapté à commander l'acquisition d'une série d'images par le capteur (101) en modifiant à chaque acquisition un réglage de mise au point du dispositif d'acquisition ; et
un dispositif de traitement de signal (109) selon la revendication 6, configuré pour générer une carte de profondeur et/ou une image entièrement focalisée d'une scène (105) vue par le capteur (101) à partir de la série d'images acquise par le dispositif d'acquisition.

8. Système selon la revendication 7, dans lequel le dispositif de traitement (109) comprend, pour chaque pixel (Pⱼ), un circuit de traitement (400j ; 500j) adapté à identifier un extrémum de la valeur de sortie du pixel (Pj) dans une série de valeurs de sortie successives fournies par le pixel.

9. Système selon la revendication 8, dans lequel chaque circuit de traitement (400ⱼ ; 500ⱼ) est adapté à traiter à la volée les valeurs de sortie du pixel (Pⱼ) auquel il est associé.

10. Système selon la revendication 8 ou 9, dans lequel chaque circuit de traitement (400j ; 500j) est intégré dans le pixel (Pj) auquel il est associé.

## Patentansprüche

1. Verfahren zum Erzeugen, mittels einer Signalverarbeitungsvorrichtung (109; 400j; 500j), einer Tiefenkarte und/oder eines voll fokussierten Bildes einer Szene (105) aus einer Reihe von Bildern der Szene, die jeweils eine gleiche Anzahl von Pixeln (Pj) aufweisen, wobei die Bilder unter einem gleichen Betrachtungswinkel, aber mit einer unterschiedlichen Fokussierung aufgenommen werden, wobei das Verfahren für jede Position eines Pixels (Pj) in der Reihe von Bildern die folgenden Schritte aufweist:
a) Suche nach einem Extremum des Pixelwertes oder nach einer Ableitung des Pixelwertes in der Reihe von Bildern, indem nur die Werte des Pixels an der betrachteten Position in der Reihe von Bildern berücksichtigt werden;
b) Zuweisen zu dieser Position eines Pixels (Pj):
- eines ersten Werts, der eine Funktion des Rangs des Bildes in der Reihe von Bildern ist, bei dem das letzte Extremum in Schritt a) identifiziert worden ist, um eine Tiefenkarte der Szene zu konstruieren, und/oder
- eines zweiten Werts, der dem Wert des Pixels in dem Bild entspricht, bei dem in Schritt a) das letzte Extremum identifiziert wurde, um ein voll fokussiertes Bild der Szene zu konstruieren;
c) Zuweisen zu dieser Position eines Pixels (Pj) eines dritten Wertes der repräsentativ für die Relevanz des ersten und/oder zweiten Wertes ist, der dem Pixel in Schritt b) zugewiesen wurde, wobei der dritte Wert bestimmt wird, indem nur die Werte des betrachteten Pixels in der Reihe von Bildern berücksichtigt werden; und
d) Liefern eines Ausgabewertes, der den ersten und/oder zweiten Wert, sowie den dritten dem Pixel zugewiesenen Wert aufweist,
wobei der dritte Wert repräsentativ für den dynamischen Bereich der Variation des Wertes des Pixels (Pj) in der Reihe von Bildern ist.

2. Verfahren nach Anspruch 1, wobei der dritte Wert gleich der Differenz zwischen dem Maximalwert und dem Minimalwert des Pixels (Pj) in der Reihe von Bildern ist.

3. Verfahren nach Anspruch 1, wobei der dritte Wert repräsentativ für den dynamischen Bereich einer lokalen Variation des Wertes des Pixels (Pj) in der Reihe von Bildern ist.

4. Verfahren nach einem der Ansprüche 1 bis 3, wobei in Schritt a) die Suche nach einem Extremum durchgeführt wird, indem die Werte des Pixels (Pj) in den aufeinanderfolgenden Bildern der Reihe von Bildern paarweise verglichen werden.

5. Verfahren nach einem der Ansprüche 1 bis 3, wobei in Schritt a) die Suche nach einem Extremum durch Suche nach einem Vorzeichenwechsel der Ableitung des Wertes des Pixels (Pj) in den aufeinanderfolgenden Bildern der Reihe von Bildern durchgeführt wird.

6. Eine Signalverarbeitungsvorrichtung (109), die in der Lage ist, das Verfahren zum Erzeugen einer Tiefenkarte und/oder eines voll fokussierten Bildes einer Szene (105) nach einem der Ansprüche 1 bis 5 zu implementieren.

7. Ein System, das Folgendes aufweist:
eine Erfassungsvorrichtung mit einem Bildsensor (101), einem optischen System (103), das gegenüber dem Sensor (101) angeordnet ist, und einer Steuerschaltung (107), die in der Lage ist, die Erfassung einer Reihe von Bildern durch den Sensor (101) zu steuern, indem bei jeder Erfassung eine Fokuseinstellung der Erfassungsvorrichtung modifiziert wird; und
die Signalverarbeitungsvorrichtung (109) nach Anspruch 6, die konfiguriert ist zum Erzeugen einer Tiefenkarte und/oder eines voll fokussierten Bildes einer Szene (105), die von dem Sensor (101) gesehen wird, und zwar aus der Reihe der von der Erfassungsvorrichtung erfassten Bilder.

8. System nach Anspruch 7, wobei die Verarbeitungsvorrichtung (109) für jedes Pixel (Pj) eine Verarbeitungsschaltung (400j; 500j) aufweist, die in der Lage ist, ein Extremum des Ausgabewertes des Pixels (Pj) aus einer Reihe von aufeinanderfolgenden Ausgabewerten, die von dem Pixel geliefert werden, zu identifizieren.

9. System nach Anspruch 8, wobei jede Verarbeitungsschaltung (400j; 500j) in der Lage ist, die Ausgabewerte des ihr zugeordneten Pixels (Pj) fliegend zu verarbeiten.

10. System nach Anspruch 8 oder 9, wobei jede Verarbeitungsschaltung (400j; 500j) in das ihr zugeordnete Pixel (Pj) integriert ist.

## Claims

1. A method of generating, by means of a signal processing device (109; 400j; 500j), a depth map and/or a fully focused image of a scene (105), from a series of images of the scene, each comprising a same number of pixels (Pⱼ), the images being taken under a same viewing angle but with a different focusing, the method comprising, for each position of a pixel (Pⱼ) in the series of images, the steps of:
a) searching for an extremum of the pixel value or of a derivative of the pixel value in the series of images by only taking into account the values of the pixel at the considered position in the series of images;
b) assigning to said position of a pixel (Pⱼ):
- a first value which is a function of the rank, in the series of images, of the image where the last extremum has been identified at step a) to construct a depth map of the scene, and/or
- a second value equal to the value of the pixel in the image where the last extremum has been identified at step a) to construct a fully focused image of the scene;
c) assigning to said position of a pixel (Pⱼ) a third value representative of the relevance of the first and/or second value assigned to the pixel at step b), the third value being determined by only taking into account the values of the considered pixel in the series of images; and
d) supplying an output value comprising the first and/or the second value, and the third value assigned to the pixel,
wherein the third value is representative of the dynamic range of the variation of the value of the pixel (Pⱼ) in the series of images.

2. The method of claim 1, wherein the third value is equal to the difference between the maximum value and the minimum value of the pixel (Pj) in the series of images.

3. The method of claim 1, wherein the third value is representative of the dynamic range of a local variation of the value of the pixel (Pⱼ) in the series of images.

4. The method of any of claims 1 to 3, wherein, at step a), the search for an extremum is performed by comparing two by two the values of the pixel (Pj) in the consecutive images of the series of images.

5. The method of any of claims 1 to 3, wherein, at step a), the search for an extremum is carried out by searching for a change of sign of the derivative of the value of the pixel (Pⱼ) in the series of images.

6. A signal processing device (109) capable of implementing the method of generating a depth map and/or a fully focused image of a scene (105) of any of claims 1 to 5.

7. A system comprising:
an acquisition device comprising an image sensor (101), an optical system (103) placed opposite the sensor (101), and a control circuit (107) capable of controlling the acquisition of a series of images by the sensor (101) by modifying on each acquisition a focus adjustment of the acquisition device; and
the signal processing device (109) of claim 6, configured to generate a depth map and/or a fully focused image of a scene (105) seen by the sensor (101) from the series of images acquired by the acquisition device.

8. The system of claim 7, wherein the processing device (109) comprises, for each pixel (Pⱼ), a processing circuit (400ⱼ; 500j) capable of identifying an extremum of the output value of the pixel (Pj) from a series of successive output values supplied by the pixel.

9. The system of claim 8, wherein each processing circuit (400j; 500j) is capable of processing on the fly the output values of the pixel (Pⱼ) associated therewith.

10. The system of claim 8 or 9, wherein each processing circuit (400j; 500j) is integrated in the pixel (Pj) associated therewith.
